# EUROPÄISCHE PATENTANMELDUNG

(11) **EP 0 808 712 A2**
(43) Veröffentlichungstag der Anmeldung: **26.11.1997**
(21) Anmeldenummer: 97108080.9
(22) Anmeldetag: 17.05.1997
(51) Int. Cl.: B32B 11/04, E04F 15/18, E04F 13/04

(54) **Baukörperteil, insbesondere Baustoffbelag oder Gebäudeteil**

(30) Priorität: 21.05.1996 DE 19620345
(71) Anmelder: Maxit Holding GmbH, 79206 Breisach (DE)
(72) Erfinder: Schopp, Bernhard, 79283 Bollschweil St. Ulrich (DE); Wetzel, Heinz, 79588 Efringen-Kirchen (DE); Zimmerer, Wilhelm, 79206 Breisach (DE); Reisch, Bruno, 79104 Freiburg (DE)
(74) Vertreter: Schmitt, Hans, Dipl.-Ing.

(57) **Zusammenfassung**

Ein Baukörperteil oder Baustoffbelag, insbesonder ein Bodenbelag oder auch eine Gebäudedecke ist aus mehreren Schichten aufgebaut, wobei die oberste oder äußerste Schicht ein Beton oder Estrich oder Putz sein kann, also aus einer mit Wasser anzumachenden Baustoffmischung besteht. Damit diese Baustoffmischung mit einem Wasserüberschuß gut fließfähig oder pastös gemacht werden kann, um sie entsprechend schnell und einfach verarbeiten zu können, trotzdem aber beim Abbinden und Austrocknen dann in dieser Schicht ein günstiger Wasser-Zement-Wert vorhanden ist bzw. der zum eigentlichen Abbinden nicht benötigte Wasserüberschuß nicht zu einer Schwindung und Rissebildung führen kann, ist mit dieser aus abbindendem Werkstoff gefertigten Schicht (4) direkt benachbart eine saugfähige Schicht oder Matte (5) angeordnet, die den zunächst vorhandenen Wasserüberschuß vorübergehend aufnimmt. Dabei kann diese saugende Matte (5) auch noch dazu ausgenutzt werden, an der Unterseite der abbindenden Schicht aus Beton oder Estrich die Festigkeit physikalisch erhöhende Gewölbestrukturen einzuformen.

## Beschreibung

Die Erfindung betrifft einen Baukörperteil, insbesondere einen Baustoffbelag zum Beispiel für begehbare Flächen, nämlich Böden, Wege, Straßen, Plätze oder für Decken, Dächer, Wände oder dergleichen, oder ein Gebäudeteil, zum Beispiel Decke, Boden oder Wand, welcher Baukörperteil aus einer mit Wasserüberschuß angemachten, abbindenden, insbesondere Zement und Zuschlagstoffe enthaltenen Baustoffmischung, zum Beispiel Fließestrich, und einer dadurch überdeckten Schicht aufgebaut ist, welche überdeckte Schicht zumindest bereichsweise aus saugfähigem oder wasseraufnehmendem Material besteht.

Der eingangs genannte Baukörperteil soll also sowohl ein solcher des Tiefbaues als auch des Hochbaues sein können und ist vor allem durch seine Scheiben- oder Schichtform gekennzeichnet, wobei sich diese nur auf einen Belag oder aber auch den ganzen Baukörperteil beispielsweise als Gebäudeteil beziehen kann.

Beispielsweise aus "Chemie des Bauwesens" Band 1, Anorganische Chemie, Karl Krenkler, Springer-Verlag, Berlin, Heidelberg, New York, 1980, S.244 ff. ist es bekannt, daß Zement je nach Zusammensetzung einen theoretischen Wasserbedarf von ca. 25% des Zementgewichtes hat, um seine Festigkeit voll zu entwickeln. Wird mit einer solchen Wassermenge ein Abbindeprozeß hervorgerufen, ergibt sich praktisch keine Schwindung oder Schrumpfung.

In der Regel wird jedoch einer einen Zement enthaltenden Baustoffmischung mehr Wasser zugegeben, um eine gut verarbeitbare plastische Masse zu erhalten. Dies führt zu einer Schwindung oder Schrumpfung und einer Rissebildung beim Abbinden. Will man diese Schwind- und Rißgefahr ausschließen, darf also die Baustoffmischung nicht mit einem Wasserüberschuß angemacht werden, sondern muß den Wasser-Zement-Wert von 0,25 oder kleiner aufweisen.

Der Vorgang der Hydratation der einzelnen Zementkörner ist beispielsweise beschrieben in "Baustoffe und Baustoffprüfung, Gerhard Stehno, Springer-Verlag, 1981, S.71 ff.

Dieses Verhalten des Zementes gilt natürlich auch für Baustoffmischungen, die Zement enthalten, beispielsweise für Beton. Übliche Betone enthalten ca. 12 bis 30 Gewichtsprozent Zement und haben ca. 70 bis 88 Gewichtsprozente sonstiger Bestandteile und Zuschlagstoffe wie Kies, Sand usw. Um eine gute Verarbeitung zu gewährleisten, ist eine Wasserzugabe erforderlich, die sich nach der gewünschten Verarbeitungskonsistenz richtet und in der Regel höher ist, als es dem oben genannten Wasser-Zement-Wert entspricht.

Für einen erdfeuchten bis leicht plastischen Beton gibt man etwa 8 bis 10 Gewichtsprozent Wasser zu. Damit erreicht man bei einem Zementgehalt von zum Beispiel 15% und ca. 80 bis 100 l Wasser pro Tonne einen Wasser-Zement-Wert von 0,53 bis 0,66. Die Annäherung an den idealen Wasser-Zement-Wert von 0,25 ist jedoch noch nicht erreicht und es bleibt weiterhin dabei, daß der Beton um ca. 1 bis 1,5 mm pro Meter schwindet. Solch ein Beton läßt sich außerdem nur schwer verdichten und ist gar nicht pumpbar, wie dies bei vielen Anwendungsfällen und insbesondere auch vielen Baukörperteilen der eingangs genannten Art erwünscht ist und angestrebt wird.

Soll der Beton - oder eine vergleichbare Baustoffmischung - auf pumpbare Konsistenz eingestellt werden, benötigt man bei gleichem Zementgehalt ca. 200 l Wasser auf 1 Tonne Beton. Dies bedeutet bei insgesamt 150 kg Zement und 850 kg Kies, Sand und ähnlichen Zuschlägen sowie 200 l Wasser einen Wasser-Zement-Wert von etwa 1,33. Ein derartiger Beton neigt zum Schwinden und zu einer starken Rißbildung.

Ferner ist es bekannt, daß man zur Verringerung der Schwindung und der Rissebildung und zur Verbesserung des entsprechenden Wasser-Zement-Wertes auf etwa 0,7, das heißt bei 150 kg Zement eine Zugabe von 105 l Wasser, dem Beton Verflüssiger zusetzen kann. Es ergibt sich dann zwar immer noch eine Schwindung, jedoch ist diese vermindert. Ein derartiger Beton ist gut pumpbar und verdichtet sich fast von selbst. Auch ist er gut nivellierbar, also insgesamt leichter zu verarbeiten.

In der Praxis reicht es aus, auf einen Wasser-Zement-Wert von 0,4 zu kommen, weil Beton dann nur noch um ca. 0,3 mm pro Meter schwindet, da die Schwindung mit steigender Zuschlagmenge bei gleichem Wasser-Zement-Wert abnimmt. Eine leicht zu verarbeitende, zum Beispiel fließfähige Konsistenz ist bei einem Wasser-Zement-Wert von 0,4 jedoch nicht zu erreichen, so daß sich die Praxis mit Schwindwerten von ca. 0,5 mm/m abgefunden hat.

Die Schwindung von Beton und anderen zemententhaltenden Baustoffmischungen kann durch längeres Feuchthalten des daraus bestehenden Baustoffkörpers weiter verringert werden. In der Praxis wird dies durch Nachbehandlungsmaßnahmen erreicht, wobei zum Beispiel eine Betonoberfläche mehrmals täglich mit Wasser bespritzt wird. Dies bedeutet jedoch einen erheblichen Zeit- und Kostenaufwand, weil solche Maßnahmen über mehrere Tage wiederholt werden müssen. Beschrieben ist dies beispielsweise in "Chemie des Bauwesens" Band 1, Anorganische Chemie, Karl Krenkler, Springer-Verlag, Berlin, Heidelberg, New York, 1980, S.249 und 264. Handelt es sich bei dem Bauteil oder Baustoffbelag oder Gebäudeteil um einen Estrichboden, ist eine solche Nachbehandlung mit mehrmaliger Bespritzung mit Wasser insbesondere wegen der unter dem Estrich in der Regel vorhandenen Dämmschicht nicht möglich.

Aus der DE-24 42 183 C2 ist ein Estrich bekannt, der auf eine wasseraufnehmende Schicht aufgebracht wird, die gemäß Sp.2, Z.45 bis 48 das aufgenommene Wasser so fest binden soll, daß dieses auch bei erhöhten Temperaturen nicht freigesetzt wird. Zwar kann dabei die Baustoffmischung mit einem Wasserüberschuß angemacht werden, jedoch wird dieses Wasser der Baustoffmischung schnell entzogen, so daß wiederum eine entsprechende Schwindung mit der Gefahr einer Rissebildung auftreten kann.

Der Erfindung liegt die Aufgabe zugrunde, einen Baukörperteil der eingangs genannten Art zu schaffen, bei welchem die Baustoffmischung, zum Beispiel Beton oder Fließestrich, mit Wasserüberschuß angemacht und verarbeitet werden kann, wobei trotz fehlender Nachbehandlung das Schwindmaß derart verringert werden soll, daß eine Rissebildung vermindert oder vermieden wird.

Die Lösung dieser scheinbar widersprüchlichen Aufgabe besteht darin, daß die saugfähige oder wasseraufnehmende Schicht auf einer wasserundurchlässigen Schicht oder Folie angeordnet und aus einem Wasser wieder abgebenden Material besteht.

Dadurch kann in vorteilhafter Weise der Wasser-Zement-Wert durch den Wasserüberschuß reduziert werden, was in an sich bekannter Weise der Schwindung des Bauteiles entgegenwirkt. Darüber hinaus wird jedoch erreicht, daß das von der wasseraufnehmenden Schicht zunächst aufgenommene Wasser von dieser wieder an den Baukörperteil bzw. Baustoffbelag abgegeben wird. Die Rückgabe dieses von der wasseraufnehmenden Schicht zunächst aufgenommenen Wasser an den Baukörperteil hat überraschenderweise eine zusätzliche Wirkung im Sinne einer Verringerung des Schwindmaßes, wie sie sonst bisher nur durch eine zeitaufwendige Nachbehandlung durch über einen längeren Zeitraum mehrmals wiederholtes Bespritzen mit Wasser erreicht werden konnte.

Durch die scheinbar widersprüchliche Maßnahme, eine wasseraufnehmende Schicht zum Entziehen von Überschuß-Wasser vorzusehen, dann aber durch eine wasserundurchlässige Schicht die Abführung dieses Wassers zumindest in erheblichem Umfange zu verhindern, kann also erreicht werden, daß einerseits der erwünschte günstige Wasser-Zement-Wert vorliegt, andererseits aber der Schwindung des Baustoffkörpers dadurch entgegengewirkt werden kann, daß er während und nach seinem Abbinden noch über längere Zeit feuchtgehalten wird und zwar mit Hilfe des Wassers, was beim Anmachen als Überschuß zu dem Verarbeitungsverhalten beigetragen hat.

Es kann also nach dem Gießen des angemachten Baustoffes und vor Beginn der Versteifung der mit Wasserüberschuß angemachten Baustoffmischung vorübergehend so viel Wasser entzogen werden, daß dadurch ein günstiger Wasser-Zement-Wert von zum Beispiel 0,4 in der abbindenden Schicht verbleibt, so daß in Verbindung mit der anschließenden Rückgabe zumindest eines Teiles des entzogenen Wassers ein Schwinden weiter vermindert und eine entsprechende Rissebildung praktisch vermieden werden kann.

Besteht beispielsweise eine Tonne des Betons oder Estriches oder dergleichen aus 150 kg Zement und 850 kg weiteren Bestandteilen, sind bei einem Wasser-Zement-Wert von 0,7 ca. 105 l Wasser zum Anmachen vorgesehen. Um diesen Wasser-Zement-Wert dann rechtzeitig auf 0,4 zurückzuführen, müssen pro Tonne Beton oder dergleichen Baustoffmischung 45 l Wasser von der saugfähigen oder wasseraufnehmenden Schicht aufgenommen werden. Somit wird das Anmachwasser in einer gewissen Zeit auf 60 l pro Tonne reduziert und damit auf einen praxisrelevanten Idealwert für den Wasser-Zement-Wert gebracht. Es ist dann das Verhältnis von 60 kg Wasser zu 150 kg Zement der angestrebte Wasser-Zement-Wert von 0,4. Die zunächst entzogenen 45 l Wasser stehen danach zur "internen Nachbehandlung" wieder zur Verfügung. Bei diesem Beispiel ergibt sich dann eine Schwindung des Betons durch Abbinden aus Austrocknen von weniger als 0,3 mm pro Meter, was geringer ist als die Schwindung eines herkömmlichen Zementestrichs, bei welchem dieser Wert ca. 0.6mm pro Meter beträgt.

Gleiche Verhältnisse können auch für Betone mit höheren oder niedrigeren Zementgehalten oder höheren Wasserzugaben erreicht werden:
Eine Tonne Beton besteht beispielsweise aus 250 kg Zement und 750 kg Zuschlagteilen sowie Verflüssiger und 140 l Wasser. Dies bedeutet einen Wasser-Zement-Wert von 0,56. Wird diesem Beton wiederum vor dem Versteifen (welches durch Beschleunigen verkürzt oder durch Verzögern verlängert werden kann) 40 l Wasser durch die saugfähige Schicht oder Matte entzogen, ergibt sich wiederum ein Verhältnis von 100 l Wasser auf 250 kg Zement, also ein Wasser-Zement-Wert von 0,4 , wie er für die Praxis besonders günstig ist.

Somit bestimmt die erfindungsgemäße saugfähige Schicht oder Matte durch ihre Materialbeschaffenheit, ihr Volumen oder Porosität, also durch ihre reversible Flüssigkeitsaufnahmefähigkeit den erreichbaren Wasser-Zement-Wert und die Dauer bzw. Intensität der Nachbehandlung. Dieser kann unter Umständen sogar noch unter den Wert von 0,4 gebracht werden, auf Wunsch oder Bedürfnis aber auch darüber liegen. Durch die saugfähige Schicht kann also die Baustoffqualität bestimmt oder jedenfalls erheblich beeinflußt werden.

Besonders zweckmäßig ist es dabei, wenn die saugfähige Schicht auf den den Baustoffbelag oder Gebäudeteil - bei seiner Herstellung - aufnehmenden, die wasserundurchlässige Schicht aufweisenden oder bildenden Untergrund oder Unterboden oder eine Schalung aufgespritzt, aufgegossen oder als Matte ausgebildet und aufgelegt ist. Handelt es sich um einen Boden, kann also die saugfähige Schicht auf den Untergrund aufgelegt werden, bevor dann der eigentliche Boden bzw. Belag aus der den Zement enthaltenden Baustoffmischung in angemachter Form darüber aufgetragen wird. Geht es um ein Gebäudeteil, zum Beispiel eine Decke, kann die saugfähige Schicht auf der Schalung aufgebracht werden, bevor dann der die Gebäudedecke bildende Beton darübergegossen wird.

Zwar kann die saugfähige Schicht oder Matte beidseitig plan sein, jedoch kann eine Ausgestaltung der Erfindung von ganz erheblicher und vorteilhafter Bedeutung darin bestehen, daß zur Erhöhung der Wasseraufnahmefähigkeit die der angemachten Baustoffmischung zugewandte Oberfläche der saugfähigen Schicht oder Matte durch Erhebungen in Form von Wölbungen und/oder Vertiefungen vergrößert ist, wobei die Erhebungen und/oder Vertiefungen zum Beispiel die Form von kugelförmigen, halbkugelförmigen, wellenförmigen, kegelförmigen, paraboloiden oder dergleichen Wölbungen haben oder als Quader, flache Zylinder oder dergleichen ausgebildet sein können.

Dabei wird gleichzeitig mit dieser Oberflächenvergrößerung zur Verbesserung der Aufnahmefähigkeit des überschüssigen Wassers auch an der Unterseite der abbindenden Schicht oder Platte eine Vielzahl von gewölbeartigen Strukturen gebildet, was die Bruchbelastbarkeit dieser Schicht nach ihrem Abbinden und Austrocknen vergrößert und zusätzlich einer Rissebildung entgegenwirkt.

Die Erfindung macht sich bei den vorbeschriebenen Merkmalen und Maßnahmen vor allem die Erkenntnis zunutze, daß bei einem Anmachen einer Baustoffmischung mit Wasserüberschuß und dem anschließenden vorübergehenden Abziehen des überschüssigen Wassers mit Hilfe der saugfähigen Schicht der Zement oder dergleichen Bindemittel etwa annähernd die Wassermenge festhält, die er zum Abbinden benötigt, so daß ein günstiger Wasser-Zement-Wert trotz des ursprünglichen Wasserüberschusses entsteht und das Baustoffteil möglichst lange feuchtgehalten wird, was die Schwindung weiter herabsetzt.

Damit die saugfähige Schicht oder Matte das zunächst überschüssige Wasser wieder abgeben kann, ist es vorteilhaft, wenn sie aus einem das Wasser physikalisch bindenden Werkstoff besteht. Somit wird ein Überschuß zunächst aufgenommen, jedoch kann dann das Wasser wieder in den Baustoffkörper zurückgegeben werden, wenn dieser abbindet und trocknet und dadurch dann ein Feuchtigkeitsgefälle von der saugfähigen Schicht zu dem Baustoff hin entsteht.

Es leuchtet ein, daß die absolute Wasseraufnahmefähigkeit vom Volumen der saugfähigen Schicht oder Matte abhängt. Zweckmäßig ist es also, wenn die Dicke oder mittlere Dicke der saugfähigen Schicht oder Matte proportional der Dicke der aufzutragenden Schicht aus Estrich, Putz, Mörtel, Beton oder dergleichen abbindendem Werkstoff ist. Bei einer dickeren Schicht aus abbindendem Werkstoff ist also auch die saugfähige Schicht oder Matte dicker, um entsprechend mehr überschüssiges Anmachwasser aufnehmen zu können.

Dabei kann die saugfähige Schicht oder Matte einen Vollquerschnitt haben und den von ihr gebildeten Zwischenraum zwischen der abbindenden Schicht und der wasserundurchlässigen Schicht ausfüllen. Somit trägt sie auch zur Stabilisierung des gesamten Baukörperteiles, dem sie angehört, bei.

Damit das zunächst entzogene Wasser tatsächlich für die interne Nachbehandlung zur Verfügung steht, wird die saugfähige Schicht oder Matte auf einer wasserundurchlässigen Schicht oder Folie, insbesondere auf einer wärme- und/oder schallisolierenden Schicht aus Natur- oder Kunststoff angeordnet. Dadurch kann auch verhindert werden, daß die von der saugenden Schicht oder Matte aufgenommene Flüssigkeit oder Feuchtigkeit in einen darunter befindlichen Bereich, beispielsweise eine darunter liegende Decke eines nächst tieferen Stockwerkes gelangt.

Auch der Werkstoff der wasseraufnehmenden Schicht kann zu einem günstigen Gesamtergebnis beitragen. Beispielsweise kann die saugfähige Schicht oder Matte Natriumpolyacrylat enthalten oder daraus bestehen und das Natriumpolyacrylat kann insbesondere mikroverkapselt sein. Dieses Material hat bekanntermaßen eine hohe Aufnahmekapazität für Wasser und wird beispielsweise in Kinderwindeln erfolgreich eingesetzt. Die dabei eventuell vorgesehene Mikroverkapselung kann in der Weise geschehen, wie es beschrieben ist in dem Buch von Hans-Georg Elias "Makromoleküle" Band 2 Technologie, Hythig + Wepf Verlag, Basel, Heidelberg, New York, 5.Aufl. (1992), S.700 bis 702.

Die saugfähige Schicht oder Matte kann jedoch auch aus Schaumstoff oder Schaumgummi, beispielsweise Moltopren, bestehen. Dies ist ein preiswerter, dennoch robuster und gut saugfähiger Werkstoff, der aber das aufgenommene Wasser auch wieder gut abgeben kann, wenn die Schicht aus dem mit Wasser angemachten Baustoff abbindet und trocknet, so daß diese dann in erwünschter Weise über längere Zeit feuchgehalten wird.

Es ist aber auch möglich, daß die saugfähige Schicht oder Matte ein Vliesstoff ist oder daraus besteht, der insbesondere eine oder mehrere Lagen Zellstoff und/oder Baumwollefasern aufweist. Solche Vliesstoffe oder Zellstoffe werden beispielsweise auch als Krankenunterlagen verwendet und haben sich ebenfalls bei der Flüssigkeitsaufnahme bewährt. Sie eigenen sich vor allem wegen ihrer einfachen und preiswerten Herstellung sowie der großen Variationsmöglichkeit gut für die erfindungsgemäße Verwendung der vorübergehenden Speicherung von Wasser.

Der Vliesstoff kann durch Nadeln, insbesondere beigemengte Kunststoffasern, die gegebenenfalls angeschmolzen sind, oder durch Latexdispersionen oder dergleichen verfestigt oder verstärkt sein. Dies kommt der Festigkeit des entsprechenden Baustoffkörpers zugute. Dabei kann selbstverständlich eine derartig ausgebildete saugfähige Schicht oder Matte zusätzlich Natriumpolyacrylat enthalten.

Durch die Verwendung von Kunststoffasern oder Latexdispersionen bei der Herstellung der Vliesstoffe kann außerdem die wasserentziehende Wirkung dieser saugfähigen Schicht oder Matte verzögert eingestellt werden. Dadurch kann auch eine gewisse Zeit für eventuell erforderliche Bearbeitungen einer solchen Beton- oder Estrichschicht gewonnen werden. Vor wllem können so großräumige Flächen hergestellt werden, ohne daß Anschlußstellen, die beim allmählichen Auftragen der angemachten Baustoffmischung entstehen, schon teilweise abgebunden sind. Diese verzögerte Wirkung des Wasserentzuges kann auch dadurch erreicht werden, daß in schon erwähnter Weise Natriumpolyacrylat in mikroverkapselter Form vorliegt.

Eine weitere Ausgestaltung der Erfindung und in diesem Zusammenhang der saugfähigen Schicht einerseits und der wasserundurchlässigen Schicht andererseits kann darin bestehen, daß die saugfähige Schicht oder Matte, insbesondere der Zell- oder Vliesstoff, auf seiner in Gebrauchsstellung der Baustoffmischung abgewandten Seite - bei einem Boden oder Estrich an der Unterseite - wasserundurchlässig ist und somit die wasserundurchlässige Schicht mitbildet, oder mit einer wasserundurchlässigen Schicht oder Folie verbunden, insbesondere verklebt ist. Dabei können die wasseraufnehmende oder saugfähige Schicht und die wasserundurchlässige Schicht oder Folie vorgefertigt miteinander verbunden sein. Somit kann bei der Herstellung der wasseraufnehmenden Schicht schon auch die wasserundurchlässige Schicht oder Folie damit verbunden werden, so daß der Verarbeiter an der Baustelle einen Arbeitsgang spart, nämlich das separate Verlegen der wasserundurchlässigen Schicht oder Folie unter den saugfähigen Schicht.

Je nach Anwendungsfall und der Menge an aufzunehmendem und wieder abzugebendem Wasser kann die saugfähige Schicht oder Matte unterschiedlich geformt sein. Dabei ist es möglich, daß die saugfähige Schicht oder Matte auch bei durch Erhebungen, Wölbungen oder Vorsprünge und/oder Vertiefungen vergrößerter Oberfläche eine im wesentlichen gleichbleibende Dicke oder Stärke hat. Sie könnte also beispielsweise durch einen Prägevorgang oder dergleichen gebildet sein und trotzdem aufgrund der weitestgehend gleichbleibenden Dicke oder Stärke praktisch überall eine gleichbleibende Wasseraufnahmekapazität pro Flächeneinheit haben.

Ein erfindungsgemäßes Verfahren zur Herstellung eines Baukörperteiles mit einer Zement oder dergleichen abbindenden Werkstoff enthaltenden Schicht und einer davon überdeckten Schicht, die ein Untergrund oder auch eine Schalung - bei einer Deckenkonstruktion als Baukörperteil - sein kann, sieht vor, daß die überdeckte Schicht aus wasseraufsaugendem Werkstoff auf den Untergrund aufgebracht und mit der den abbindenden Werkstoff enthaltenden Baustoffmischung übergossen wird, wobei diese Baustoffmischung zuvor mit einem Wasserüberschuß angemacht wird. Erfindungsgemäß ist bei diesem Verfahren vorgesehen, daß die Schicht aus wasseraufnehmendem oder wasseraufsaugendem Werkstoff auf einer wasserundurchlässigen Schicht oder Folie angebracht wird. Somit kann sie sehr gut aufgrund ihres pastösen oder fließfähigen Zustandes verteilt werden, was beispielsweise bei einem Fließestrich von großem Nutzen und Vorteil bei der Verarbeitbarkeit ist, jedoch wird trotzdem einem Schwinden und einer Rissebildung dadurch entgegengewirkt, daß der Wasserüberschuß nach dieser Verteilung auf der wasseraufsaugenden Schicht von dieser aus der Baustoffmischung vorübergehend abgesaugt wird, so daß sie mit einem günstigen Wasser-Zement-Wert trocknen und abbinden kann und während dieses Vorganges eine "interne Nachbehandlung" erfährt, indem sie durch das von der wasseraufnehmenden Schicht wieder an sie zurückgegebene Wasser feuchtgehalten wird.

Das von der saugfähigen Schicht aufgenommene Wasser wird also bei diesem Verfahren allmählich an die abbindende und/oder abgebundene Schicht zumindest teilweise wieder abgegeben, um dieses Feuchthalten über einen längeren Zeitraum zu bewirken, was einer weiteren Schwindung und Rissebildung entgegenwirkt.

Die saugfähige Schicht kann aus einem zunächst fließfähigen und dann aushärtenden Kunststoff hergestellt und auf der wasserundurchlässigenSchicht,insbesondereeinemwasserundurchlässigenUntergrund verteilt, zum Beispiel aufgegossen oder aufgespritzt werden. Es ist aber auch möglich, daß sie einfach als vorgefertigte Matte oder auch aus losen Körpern bestehend auf den Untergrund aufgelegt wird.

Zur Vergrößerung der Oberfläche der saugfähigen Schicht können nach deren Verteilen auf dem Untergrund und vor dem Erstarren Vorsprünge und Vertiefungen an der Oberfläche angeformt werden. Dabei wird dadurch nicht nur die Oberfläche vergrößert, sondern es wird auch Vorsorge dafür geschaffen, daß an der Baustoffschicht unterseitig gewölbeartige Strukturen geschaffen werden, die die Festigkeit erhöhen und einer Rissebildung entgegenwirken.

Ein Zementfließestrich wird in eine Schichtdicke von 40 mm in eine Form gegossen, die 1000 mm lang und 80 mm breit ist und welche die Messung der Längenänderung des Formteiles erlaubt. Der Wasser-Zement-Wert beträgt beim Vergleichsversuch auf Polyäthylenfolie 0,77. Beim erfindungsgemäßen Beispiel wird auf die wasserundurchlässige Folie eine Zellstoffmatte gelegt und auf diesen der Fließestrich gegossen. Nach 45 Minuten ist der Baustoffmischung so viel Wasser entzogen, daß der Wasser-Zement-Wert 0,63 beträgt, nach 6 Stunden ist er auf 0,55 gesunken. Von dem zunächst entzogenen Wasser werden innerhalb von 28 Tagen etwa 65% wieder an den Baustoff abgegeben. Das Trocknungsschwinden beträgt nach 28 Tagen beim Vergleichsversuch 0,54 mm/m, beim erfindungsgemäßen Aufbau 0,24 mm/m. Selbst nach 10 Monaten ist die Verbesserung des Schwindmaßes beim erfindungsgemäßen Aufbau mit 0,25 mm/m deutlich ausgeprägt. Der Fachmann wird diese Verbesserung, die über Rissebildung oder das Fehlen von Rissen entscheidet, zu schätzen wissen. Die Verdunstung an der Oberfläche des Formteiles war dabei in beiden Fällen etwa gleich. Dies verdeutlicht, daß durch den erfindungsgemäßen Aufbau das durch Verdunstung entweichende Wasser durch die Rückgabe des zunächst von der saugfähigen Schicht aufgenommenen Wassers quasi Verhältnisse geschaffen werden, die einem Erhärten und Abbinden unter Wasser nahekommen, was bekanntlich die Schwindung reduziert. Wobei der erfindungsgemäße Aufbau den zusätzlichen Vorteil aufweist, zunächst den Wasser-Zement-Wert herabzusetzen, was bei einer Erhärtung von Baustoffen unter Wasser natürlich nicht möglich ist, ganz abgesehen davon, daß es in der Praxis kaum anwendbar wäre.

Nachstehend sind Ausführungsbeispiele der Erfindung bzw. der einen wesentlichen Teil der Erfindung ausmachenden saugfähigen Schicht oder Matte anhand der Zeichnung näher beschrieben. Es zeigt in zum Teil schematisierter Darstellung:
- Fig.1: in schaubildlicher Darstellung einen Teil eines platten- oder scheibenförmigen Baukörperteiles, zum Beispiel einer Gebäudedecke mit gleichzeitigen Schnitten rechtwinklig zu seiner Oberfläche, wobei auf einer untersten, eine Rohbetondecke darstellenden Schicht eine Dämmplatte und darüber eine wasserundurchlässige Schicht oder Folie als Trennlage angeordnet sind, auf welcher sich die saugende Schicht befindet, auf welcher ein Estrich als Baustoffbelag aufgetragen ist, dessen beim Auftragen vorhandener Wasserüberschuß von der saugenden Schicht vorübergehend abgesaugt wird,
- Fig.2: in schaubildlicher und teilweise im Schnitt gehaltener Darstellung eine zum Beispiel aus Schaumstoff oder dergleichen nicht-saugendem Werkstoff bestehende Matte, auf die zum Beispiel die saugende Schicht aufgespritzt werden kann, die unter einem Estrich oder Beton gemäß Fig.1 angeordnet werden kann,
- Fig.3: eine schaubildliche Darstellung eines abgewandelten Ausführungsbeispieles einer saugenden Schicht mit im Abstand nebeneinander angeordneten halbkugelförmigen Erhebungen, wobei unter dieser saugenden Schicht eine undurchlässige Folie und darunter eine Dämmplatte angeordnet sind,
- Fig.4: eine saugende Schicht mit etwa quaderförmigen Erhebungen sowie
- Fig.5: eine saugende Schicht, bei welcher mit Abstand zueinander Vertiefungen angeordnet sind.

Bei den nachfolgend beschriebenen unterschiedlichen Ausführungsbeispielen sind hinsichtlich ihrer Funktion im wesentlichen übereinstimmende Teile mit übereinstimmenden Bezugszahlen versehen, selbst wenn sie in ihrer Ausgestaltung etwas voneinander abweichen.

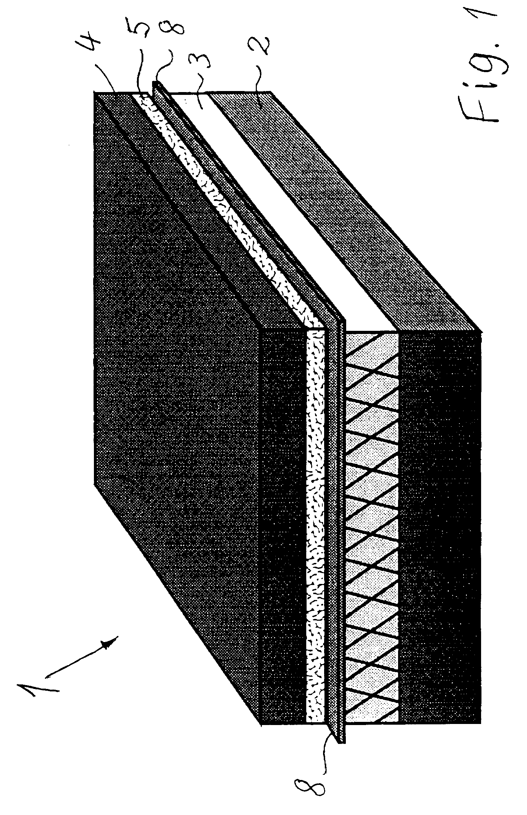

Ein im ganzen mit 1 bezeichneter Baukörperteil ist aus mehreren Schichten aus unterschiedlichen Werkstoffen zusammengesetzt und könnte zu einer begehbaren Fläche, nämlich dem Boden eines Gebäudes oder einer Fabrikhalle, einem Weg, einer Straße, einem Platz oder dergleichen gehören. Im Ausführungsbeispiel handelt es sich um eine Gebäudedecke, die als unterste Schicht eine Rohbetondecke 2 hat, auf welcher in diesem Ausführungsbeispiel eine Dämmplatte 3 liegt. Die oberste Schicht dieses Baukörperteiles 1 ist ein Estrich 4, jedoch könnte diese oberste Schicht je nach Anwendungsfall auch ein Beton und - im Falle eines als Wand ausgebildeten Baukörperteiles 1 - ein Putz sein. In jedem Falle ist diese in Fig.1 oberste oder äußerste Schicht 4 aus einer mit Wasserüberschuß angemachten, abbindenden, insbesondere Zement und Zuschlagstoffe enthaltenden Baustoffmischung gebildet. Je mehr Wasserüberschuß dabei zunächst in dieser Baustoffmischung enthalten ist, um so leichter läßt sie sich auf ihrem Untergrund verteilen, wobei der Untergrund in Fig.1 erkennbar ist, aber auch im Falle eines nur betonierten Baukörperteiles 1 eine Schalung sein könnte. Durch den hohen Wasserüberschuß läßt sich diese Schicht 4 schnell und gut verteilen und bedarf nur geringer Nacharbeit, um eine glatte Oberseite zu erzielen. Ein Beispiel dafür ist Fließestrich.

Um einer beim Trocknen und Abbinden durch den Wasserüberschuß bewirkten Rissebildung entgegenzuwirken, ist unterhalb der aus abbindendem Baustoff befindlichen Schicht 4 eine davon überdeckte Schicht oder Matte 5 vorgesehen, die aus reversibel saugfähigem oder wasseraufnehmendem Material, beispielsweise aus Zellstoff oder Vliesstoff besteht. Diese liegt auf einer wasserundurchlässigen Schicht 8, zum Beispiel einer Polyäthylenfolie.

Wird nun die Baustoffschicht 4 mit Wasserüberschuß darauf aufgetragen, kann sie aufgrund des Wasserüberschusses schnell und gut verteilt und verarbeitet werden, jedoch wird dann der Wasserüberschuß von dieser Schicht oder Matte 5 aufgenommen, während in der Baustoffmischung nur noch etwa die Wassermenge gehalten wird, die Zement oder dergleichen Bindemittel, für den Abbindevorgang benötigt, so daß während des Abbindens und Trocknens praktisch kein Schwinden und keine Rissebildung auftritt, was ganz erheblich dadurch gefördert wird, daß diese Baustoffschicht 4 über einen längeren Zeitraum feuchtgehalten wird, weil die saugfähige Schicht 5 zumindest einen Teil des aufgenommenen Wassers wieder an die Baustoffschicht 4 abgibt.

Somit können aufgrund der Anordnung der saugfähigen oder wasseraufnehmenden Schicht 5 einander bisher widersprechende und sich ausschließende Maßnahmen durchgeführt werden, das heißt der zur Bildung der oberen Schicht 4 dienende Baustoff kann für eine schnelle, gute und einfache Verteilung und Glättung mit Wasserüberschuß angemacht werden und trotzdem kann die eigentlich durch Wasserüberschuß bewirkte starke Schwindung und Rissebildung vermieden werden.

Zwar kann die saugfähige Schicht 5 auf den den Baustoffbelag 4 aufnehmenden Untergrund 2 oder Unterboden oder gegebenenfalls eine Schalung aufgespritzt oder aufgegossen und eventuell an seiner Oberfläche noch zu ihrer Vergrößerung mit Erhebungen und Vertiefungen versehen werden, jedoch ist die saugfähige Schicht 5 zweckmäßigerweise als Matte ausgebildet, die in gewünschter Größe ausgelegt werden kann. Im folgenden wird die saugende Schicht deshalb auch als Matte 5 bezeichnet.

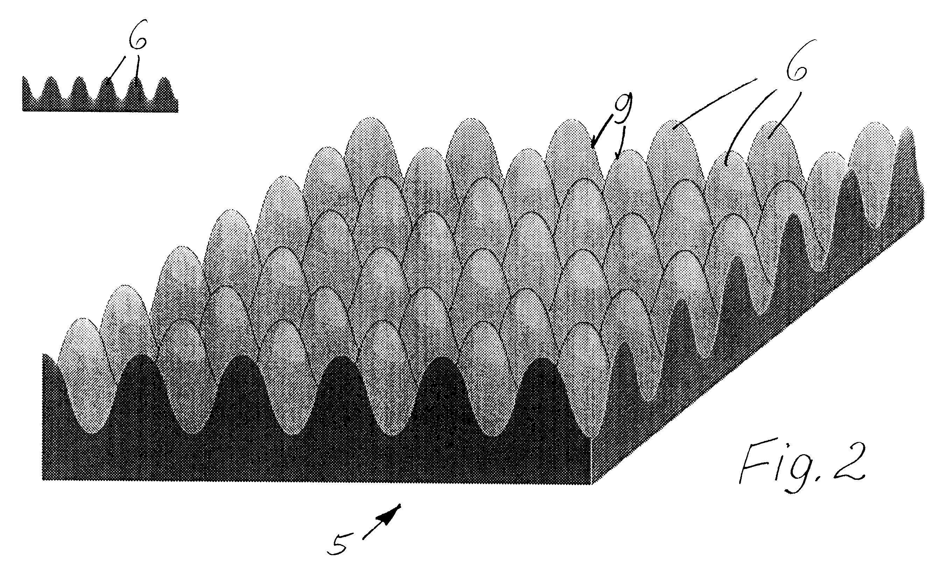

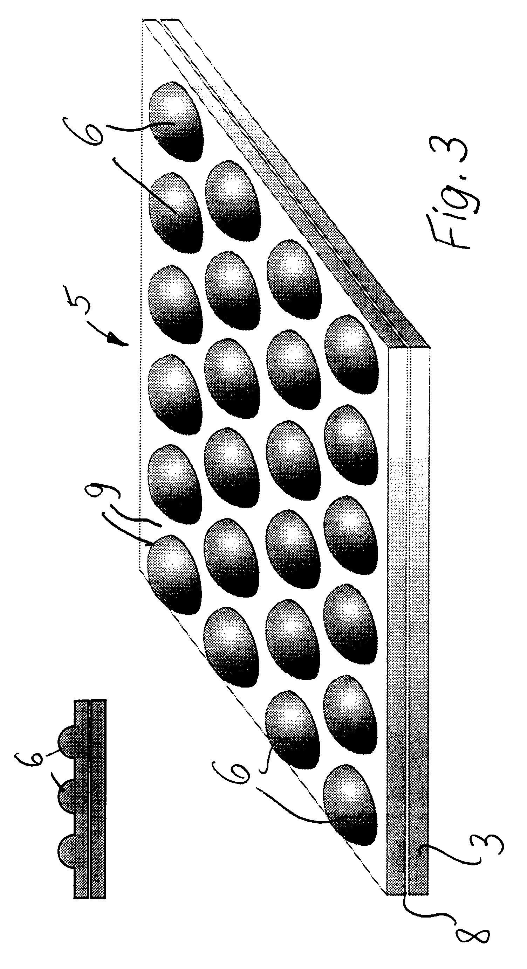

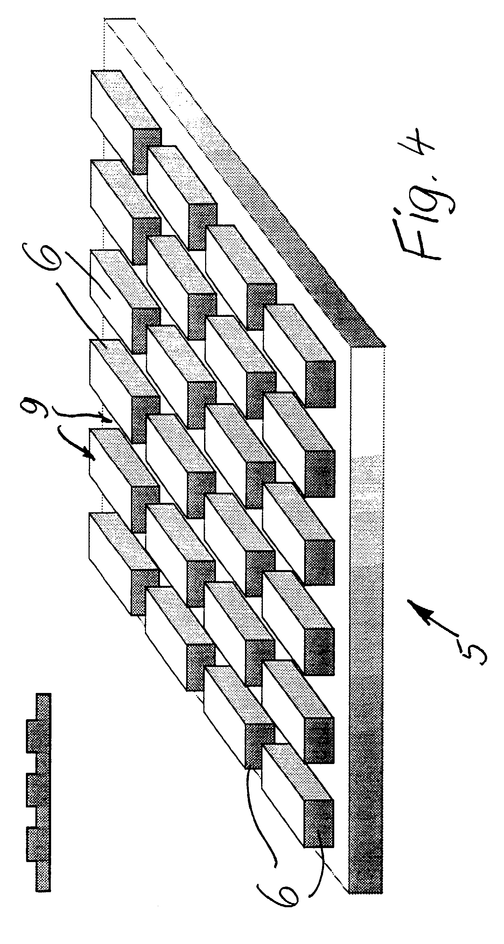

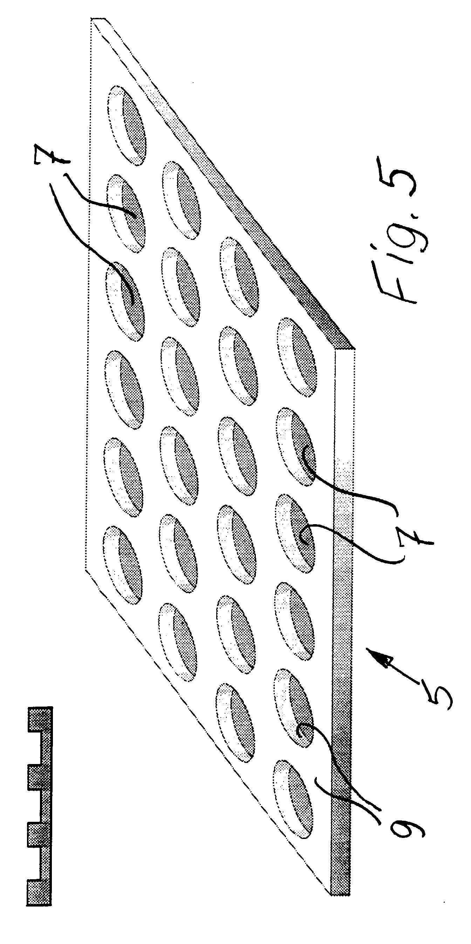

In den Figuren 2 bis 5 sind verschiedene Ausführungsformen dieser aus saugfähigem Werkstoff bestehenden Matte 5 dargestellt, wobei allen gemeinsam ist, daß zur Erhöhung der Wasseraufnahmefähigkeit die der angemachten Baustoffmischung und Schicht 4 zugewandte Oberfläche durch Erhebungen 6 in Form von unterschiedlichen Wölbungen oder Vorsprüngen (Fig.1 bis 4) oder Vertiefungen 7 (Fig.5) vergrößert ist. Die Erhebungen haben dabei die Form von halbkugelförmigen (Fig.3) oder wellenförmigen (Fig.1 u.2) Wölbungen, wobei man die Erhebungen 6 der Fig.1 und 2 auch als Paraboloid ansehen kann, weil die Wellenform auch räumlich vorgesehen ist. Gemäß Fig.4 können die Erhebungen 6 aber auch quaderförmig ausgebildet sein. Darüber hinaus sind weitere Formen denkbar, wie zum Beispiel Kegel, Pyramiden, Halbzylinder, flache Vollzylinder und dergleichen.

Im Ausführungsbeispiel nach Fig.5 sind etwa zylinderförmige Vertiefungen vorgesehen.

Die Dicke oder mittlere Dicke der saugfähigen Schicht oder Matte 5 ist gemäß Fig.1 proportional der Dicke der darauf aufzutragenden Schicht 4 aus Estrich, Putz, Mörtel, Beton oder dergleichen abbindender Baustoffmischung, damit eine entsprechende Menge an überschüssigem Wasser aufgenommen werden kann. Dabei hängt diese aufzunehmende Wassermenge auch von dem Anteil des wasserbindenden Bestandteiles, insbesondere des Zementes innerhalb der Baustoffmischung der Schicht oder des Belages 4 ab. Vorteilhaft ist dabei, daß der Zement oder dergleichen trotz der Absaugung durch saugende Matte 5 etwa so viel Wasser festhält oder bindet, wie er beim Abbinden und Austrocknen benötigt.

Die vorerwähnten Erhebungen 6 oder Vertiefungen 7 bilden an der Unterseite der Schicht 4 gewölbeartige Strukturen aus, die auf physikalischem Wege die Festigkeit erhöhen und beim Austrocknen und Abbinden ebenfalls auf physikalischem Weg der Rissebildung entgegenwirken, so daß solche Risse auf zweifache Weise vermieden werden, nämlich durch die erwähnten gewölbeartigen Strukturen einerseits und vor allem dadurch, daß während des Abbindens innerhalb der mit Wasser angemachten Baustoffschicht 4 trotz des ursprünglichen Wasserüberschusses nur noch diejenige Wassermenge enthalten ist, die dabei für einen optimalen oder nahezu optimalen Wasser-Zement-Wert erforderlich ist und die beschriebene "interne Nachbehandlung" erfolgt.

In allen Figuren erkennt man, daß die saugfähige Matte 5 einen Vollquerschnitt hat und den von ihr gebildeten Zwischenraum zwischen der abbindenden Schicht 4 und dem Untergrund 3, 2 ausfüllt.

Dabei ist in Fig. 1 und 3 dargestellt, daß die saugfähige Schicht oder Matte 5 auf einer wasserundurchlässigen Schicht oder Folie 8 angeordnet ist, um eine Trennung von einer darunter befindlichen wärme- und/oder schallisolierenden Schicht 3 zu bewirken und das abgesaugte Wasser in der saugfähigen Matte 5 zu halten, so daß es anschließend allmählich wieder an die Schicht 4 zumindest teilweise abgegeben und diese dadurch länger feuchtgehalten werden kann.

Insgesamt wird ein Baukörperteil 1 aus mehreren Schichten gebildet, der eine Gebäudedecke oder auch einen Baustoffbelag für begehbare Flächen oder dergleichen darstellen kann und bei dem in scheinbar widersprüchlicher Weise eine anzumachende Baustoffmischung mit einem Wasserüberschuß angemacht werden kann und einer Rissebildung entgegengewirkt werden kann, weil während des Abbindevorganges nur etwa diejenige Wassermenge in dem abbindenden Baustoff vorhanden ist, die für den Abbindeprozeß selbst tatsächlich notwendig ist, weil der Wasserüberschuß von der mit diesem abbindenden Baustoff in Berührung befindlichen saugfähigen Schicht oder Matte 5 vorübergehend abgesaugt und später teilweise wieder zurückgegeben wird.

Die saugfähige Schicht oder Matte 5 besteht also aus einem das Wasser physikalisch bindenden Werkstoff, so daß sie es auch wieder abgeben kann. Dabei hat sie in den Ausführungsbeispielen einen Vollquerschnitt und füllt den von ihr gebildeten Zwischenraum zwischen der abbindenden Schicht 4 und der wasserundurchlässige Schicht 5 aus, wobei die vorerwähnte Ausgestaltung mit Erhebungen und Vertiefungen nicht unbedingt erforderlich ist, sondern gemäß Fig.1 auch eine nicht strukturierte, im wesentlichen etwa ebene oder zur Oberfläche parallele saugfähige Schicht oder Matte 5 etwa gleichgleibender Dicke vorgesehen sein kann.

Ferner sei erwähnt, daß die wasserundurchlässige Folie 8 mit der saugfähigen Schicht oder Matte 5 vorgefertigt verbunden sein kann, so daß beide in einem einzigen Arbeitsgang an der Baustelle verlegt werden können.

Sowohl in diesem Falle als aber auch im Falle einer getrennten Verlegung wird die Schicht 5 aus wasseraufsaugendem Werkstoff also auf einer wasserundurchlässigen Schicht oder Folie 8 angebracht, sei es nämlich schon bei der Vorfertigung, sei es erst später bei der Verlegung. Somit kann, wie vorstehend schon beschrieben, das von der saugfähigen Schicht 5 aufgenommene Wasser allmählich an die abbindende oder abgebundene Schicht 4 zumindest teilweise wieder abgegeben werden, so daß diese in erwünschter Weise länger feuchtgehalten wird.

Ferner kann die saugfähige Schicht 5 aus einem zunächst fließfähigen und dann aushärtenden Kunststoff hergestellt und auf der wasserundurchlässigen Schicht 8, insbesondere einem wasserundurchlässigen Untergrund verteilt, zum Beispiel aufgegossen oder aufgespritzt werden. Dies erlaubt es, zur Vergrößerung der Oberfläche der saugfähigen Schicht 5 nach deren Verteilen auf dem Untergrund und vor dem Erstarren die Erhebungen oder Vorsprünge 5 und/oder Vertiefungen an der Oberfläche anzuformen.

Der Baukörperteil oder Baustoffbelag, insbesondere ein Bodenbelag oder auch eine Gebäudedecke ist aus mehreren Schichten aufgebaut, wobei die oberste oder äußerste Schicht ein Beton oder Estrich oder Putz sein kann, also aus einer mit Wasser anzumachenden Baustoffmischung besteht. Damit diese Baustoffmischung mit einem Wasserüberschuß gut fließfähig oder pastös gemacht werden kann, um sie entsprechend schnell und einfach verarbeiten zu können, trotzdem aber beim Abbinden und Austrocknen dann in dieser Schicht ein günstiger Wasser-Zement-Wert vorhanden ist bzw. der zum eigentlichen Abbinden nicht benötigte Wasserüberschuß nicht zu einer Schwindung und Rissebildung führen kann, ist mit dieser aus abbindendem Werkstoff gefertigten Schicht 4 direkt benachbart eine saugfähige Schicht oder Matte 5 angeordnet, die den zunächst vorhandenen Wasserüberschuß vorübergehend aufnimmt. Dabei kann diese saugende Matte 5 auch noch dazu ausgenutzt werden, an der Unterseite der abbindenden Schicht aus Beton oder Estrich die Festigkeit physikalisch erhöhende Gewölbestrukturen einzuformen. Das von der saugenden Schicht oder Matte 5 aufgenommene Wasser wird durch eine wasserundurchlässige Schicht oder Folie 8 festgehalten, so daß es anschließend wenigstens teilweise wieder an die abbindende Schicht 4 abgegeben und diese dadurch länger feuchtgehalten werden kann.

## Patentansprüche

1. Baukörperteil (1), insbesondere Baustoffbelag zum Beispiel für begehbare Flächen, nämlich Böden, Wege, Straßen, Plätze, oder für Decken, Dächer, Wände oder dergleichen, oder als Gebäudeteil, zum Beispiel Decke, Boden oder Wand, welcher Baukörperteil (1) aus einer mit Wasserüberschuß angemachten, abbindenden, insbesondere Zement und Zuschlagstoffe enthaltenden Baustoffmischung, zum Beispiel Fließestrich oder Beton, und einer dadurch überdeckten Schicht aufgebaut ist, welche überdeckte Schicht (5) zumindest bereichsweise aus saugfähigem oder wasseraufnehmendem Material besteht, **dadurch gekennzeichnet**, daß die saugfähige oder wasseraufnehmende Schicht (5) auf einer wasserundurchlässigen Schicht oder Folie (8) angeordnet und aus einem Wasser wieder abgebenden Material besteht.

2. Baukörperteil nach Anspruch 1, dadurch gekennzeichnet, daß die saugfähige Schicht (5) auf den den Baustoffbelag (4) oder Gebäudeteil aufnehmenden die wasserundurchlässige Schicht aufweisenden oder bildenden Untergrund (2) oder eine Schalung aufgespritzt oder aufgegossen oder als Matte (5) ausgebildet und aufgelegt ist.

3. Baukörperteil nach Anspruch 1 oder 2, dadurch gekennzeichnet, daß zur Erhöhung der Wasseraufnahmefähigkeit die der angemachten Baustoffmischung (4) zugewandte Oberfläche der saugfähigen Schicht oder Matte (5) durch Erhebungen (6) in Form von Wölbungen oder Vorsprüngen und/oder Vertiefungen (7) vergrößert ist, wobei die Erhebungen (6) und/oder Vertiefungen zum Beispiel die Form von kugelförmigen, halbkugelförmigen, wellenförmigen, kegelförmigen, paraboloiden oder dergleichen Wölbungen haben oder als Quader, flache Zylinder oder dergleichen ausgebildet sind.

4. Baukörperteil nach einem der Ansprüche 1 bis 3, dadurch gekennzeichnet, daß die saugfähige Schicht oder Matte (5) aus einem das Wasser physikalisch bindenden Werkstoff besteht.

5. Baukörperteil nach einem der Ansprüche 1 bis 4, dadurch gekennzeichnet, daß die Dicke oder mittlere Dicke der saugfähigen Schicht oder Matte (5) proportional der Dicke der aufzutragenden Schicht (4) aus Estrich, Putz, Mörtel, Beton oder dergleichen abbindendem Werkstoff ist.

6. Baukörperteil nach einem der Ansprüche 1 bis 5, dadurch gekennzeichnet, daß die saugfähige Schicht oder Matte (5) einen Vollquerschnitt hat und den von ihr gebildeten Zwischenraum zwischen der abbindenden Schicht (4) und der wasserundurchlässigen Schicht ausfüllt.

7. Baukörperteil nach einem der Ansprüche 1 bis 6, dadurch gekennzeichnet, daß die saugfähige Schicht oder Matte (5) Natriumpolyacrylat enthält oder daraus besteht und das Natriumpolyacrylat insbesondere mikroverkapselt ist.

8. Baukörperteil nach einem der Ansprüche 1 bis 7, dadurch gekennzeichnet, daß die saugfähige Schicht oder Matte (5) aus Schaumstoff oder Schaumgummi, beispielsweise Moltopren, besteht.

9. Baukörperteil nach einem der Ansprüche 1 bis 7, dadurch gekennzeichnet, daß die saugfähige Schicht oder Matte (5) ein Vliesstoff ist, der insbesondere eine oder mehrere Lagen Zellstoff und/oder Baumwollefasern aufweist.

10. Baukörperteil nach Anspruch 9, dadurch gekennzeichnet, daß der/die Vliesstoffe durch Nadeln, insbesondere beigemengte Kunststoffasern, die gegebenenfalls angeschmolzen sind, oder durch Latexdispersionen oder dergleichen verfestigt oder verstärkt sind.

11. Baukörperteil nach einem der vorstehenden Ansprüche, dadurch gekennzeichnet, daß die saugfähige Schicht oder Matte (5), insbesondere der Zell- oder Vliesstoff, auf seiner in Gebrauchsstellung der Baustoffmischung abgewandten Seite - bei einem Boden oder Estrich an der Unterseite - wasserundurchlässig ist und somit die wasserundurchlässige Schicht bildet, oder mit einer wasserundurchlässigen Schicht oder Folie verbunden, insbesondere verklebt ist.

12. Baukörperteil nach Anspruch 11, dadurch gekennzeichnet, daß die wasseraufnehmende oder saugfähige Schicht (5) und die wasserundurchlässige Schicht oder Folie (8) vorgefertigt miteinander verbunden sind.

13. Baukörperteil nach einem der Ansprüche 1 bis 12, dadurch gekennzeichnet, daß die saugfähige Schicht oder Matte (5) auch bei durch Erhebungen, Wölbungen oder Vorsprünge und/oder Vertiefungen vergrößerter Oberfläche eine im wesentlichen gleichbleibende Dicke oder Stärke hat.

14. Verfahren zur Herstellung eines Baukörperteiles (1) oder Baustoffbelages mit einer Zement oder dergleichen abbindenden Werkstoff enthaltenden Schicht (4) und einer davon überdeckten Schicht (5), wobei die überdeckte Schicht (5) aus wasseraufsaugendem Werkstoff auf einen Untergrund aufgebracht und mit der den abbindenden Werkstoff enthaltenden Baustoffmischung übergossen wird, wobei diese Baustoffmischung zuvor mit einem Wasserüberschuß angemacht wird, **dadurch gekennzeichnet**, daß die Schicht (5) aus wasseraufsaugendem Werkstoff auf einer wasserundurchlässigen Schicht oder Folie (8) angebracht wird.

15. Verfahren nach Anspruch 14, dadurch gekennzeichnet, daß das von der saugfähigen Schicht (5) aufgenommene Wasser allmählich an die abbindende und/oder abgebundene Schicht (4) zumindest teilweise wieder abgegeben wird.

16. Verfahren nach Anspruch 14 oder 15, dadurch gekennzeichnet, daß die saugfähige Schicht (5) aus einem zunächst fließfähigen und dann aushärtenden Kunststoff hergestellt und auf der wasserundurchlässigen Schicht insbesondere einen undurchlässigen Untergrund verteilt, zum Beispiel aufgegossen oder aufgespritzt wird.

17. Verfahren nach einem der Ansprüche 14 bis 16, dadurch gekennzeichnet, daß zur Vergrößerung der Oberfläche der saugfähigen Schicht (5) nach deren Verteilen auf dem Untergrund und vor dem Erstarren Erhebungen oder Vorsprünge (6) und/oder Vertiefungen an der Oberfläche angeformt werden.
